# FASCICULE DE BREVET EUROPEEN

(11) **EP 1 828 654 B1**
(45) Date de publication et mention de la délivrance du brevet: **07.12.2011**
(21) Numéro de dépôt: 05824459.1
(22) Date de dépôt: 07.12.2005
(51) Int. Cl.: F16K 47/08, G05D 7/01, G01F 15/04

(54) **DETENDEUR DE GAZ AUTONOME A CORRECTION AUTOMATIQUE DE TEMPERATURE ET D'ALTITUDE AVEC ECRETAGE**
SELBSTÄNDIGER GASREGULATOR MIT AUTOMATISCHER TERMPERATUR- UND HÖHENKORREKTUR UND CLIPPING-FUNKTION
STAND-ALONE GAS REGULATOR WITH AUTOMATIC TEMPERATURE AND ALTITUDE CORRECTION WITH CLIPPING FUNCTION

(30) Priorité: 22.12.2004 FR 0413699
(43) Date de publication de la demande: 05.09.2007
(73) Titulaire: Clesse Industries, 63800 Cournon d'Auvergne (FR)
(72) Inventeur: BRUHAT, Pascal, F-63800 LA ROCHE NOIRE (FR); CAUTENET, Etienne, F-63730 Les Martres de Veyre (FR)
(74) Mandataire: Gaillarde, Frédéric F. Ch.
(86) Numéro de dépôt international: PCT/FR2005/003061
(87) Numéro de publication internationale: WO 2006/070086

(56) Documents cités:
- EP-A- 1 063 466
- WO-A-2004/059413
- DE-B- 1 163 108
- US-A- 5 423 342

## Description

La présente invention se rapporte à un détendeur de gaz destiné à être monté sur un conduit d'amenée de gaz reliant une source de gaz à un appareil utilisateur via un compteur volumétrique placé immédiatement en aval dudit détendeur.

Le comptage en phase gazeuse des gaz destinés à des utilisations domestiques et/ou industrielles, tels que le gaz naturel ou GPL (gaz de pétrole liquéfié), se fait fréquemment à l'aide d'un compteur volumétrique à membranes, positionné au niveau de la canalisation de la distribution.

Cette solution présente l'avantage d'être simple à mettre en oeuvre, et le dispositif de mesure est relativement économique. Néanmoins, ce type de compteur n'étant sensible qu'au volume de gaz qui le traverse indépendamment de tout autre paramètre, cela implique que la totalisation générée est proportionnelle à ce volume.

Cependant, la mesure du volume ne reflète pas la réalité de la consommation énergétique puisque l'énergie consommée par l'utilisateur est directement proportionnelle à la masse.

Afin de mieux maitriser le comptage énergétique, il faut donc être en mesure de générer une totalisation de la consommation proportionnelle à la masse délivrée.

Or, comme tous les gaz, le gaz naturel ou les GPL ont une masse volumique qui évolue en fonction de leur température, même si la pression est maintenue à une valeur constante. Etant donné que le débit massique peut être défini comme étant le produit du débit volumique par la masse volumique, il en découle que la consommation massique d'une installation ne peut pas être obtenue de façon proportionnelle au volume totalisé par le compteur.

Le document FR 2 786 865 décrit justement un détendeur de gaz permettant la délivrance d'un débit volumique corrigé en pression en fonction de la température du gaz. Pour cela, une capsule contenant un fluide ou un gaz liquéfié est disposée dans le conduit de gaz. Cette capsule est reliée par un capillaire à un soufflet exerçant des contraintes sur un ressort agissant sur la membrane du détendeur à laquelle est rattaché un mécanisme de régulation de la pression. En fonction de la température du gaz circulant dans le conduit, la pression du fluide contenu dans la capsule varie, et il en découle que les contraintes exercées sur la membrane varient également. Un tel détendeur est cependant délicat à réaliser car il est nécessaire de prévoir des traversées étanches d'un volume à l'autre. De plus, le capillaire doit être protégé mécaniquement.

Le document FR 2 807 833 décrit un dispositif d'alimentation en gaz avec détermination du débit volumique corrigé en température et en pression. Ce dispositif comprend notamment un détendeur comportant un organe thermosensible placé dans une chambre à température ambiante. Néanmoins, ce dispositif est relativement encombrant et coûteux, et ne prend pas directement en compte la température du gaz entrant dans le dispositif.

Par ailleurs, comme tous les gaz, le gaz naturel ou le GPL ont une masse volumique variable en fonction de l'altitude à laquelle ils sont stockés. Par conséquent, la mesure de la consommation est faussée si ce paramètre n'est pas pris en compte. En effet, un compteur volumétrique alimenté à une pression donnée aura tendance à indiquer une totalisation de gaz de plus en plus importante au fur et à mesure que l'altitude augmentera.

La demande WO 2004/059413 a alors proposé un détendeur comprenant, d'une part, un mécanisme de régulation de la pression commandé par le déplacement d'un élément mobile, et d'autre part, un premier ressort agissant sur une membrane et permettant de prendre en compte la variation de la pression altimétrique. De plus, un tel détendeur peut également renfermer un organe thermosensible agissant sur ladite membrane par l'intermédiaire d'un deuxième ressort disposé concentriquement par rapport au premier, de façon à prendre en compte la variation de la température.

Bien que ce détendeur permette de répondre de façon satisfaisante aux attentes de l'homme du métier, il présente cependant l'inconvénient de comporter une pluralité de ressorts exerçant des contraintes dissociées sur la membrane en des zones différentes, et il donc nécessaire de s'assurer que ces différents ressorts sont convenablement disposés à l'intérieur du détendeur pour éviter toute imprécision de la mesure. Les documents EP 1 063 466 A et US 5 423 342 A décrivent des détendeurs de gaz suivant le préambule de la revendication 1.

La présente invention a pour but de remédier à cet inconvénient, et consiste pour cela en un détendeur de gaz destiné à être monté sur un conduit d'amenée de gaz reliant une source de gaz à un appareil utilisateur via un compteur volumétrique, ce détendeur renfermant un organe thermosensible et une bague de réglage altimétrique permettant de prendre respectivement en compte la variation de la température ambiante et la variation de la pression atmosphérique liée à l'altimétrie, ainsi qu'un mécanisme de régulation de la pression commandé par le déplacement d'un élément mobile, un unique actionneur précontraint réglable comprenant un ressort de consigne intercalé entre, d'une part, l'élément mobile, et d'autre part, une tige de poussée sur laquelle s'exercent les contraintes générées par l'organe thermosensible et la bague de réglage altimétrique.

Ainsi, le fait d'employer une tige de poussée apte à recueillir, à la fois les contraintes exercées par l'organe thermosensible, et les contraintes exercées par la bague de réglage altimétrique, permet de n'utiliser qu'un unique actionneur précontraint réglable pris en sandwich entre ladite tige de poussée et l'élément mobile.

Par ailleurs, dans un détendeur de gaz selon cette configuration, il doit être bien compris que la pression de sortie peut être amenée à varier dans une proportion relativement importante. Dans certains cas, il est alors souhaitable de procéder à un écrêtage de la pression de sortie de façon à ce que la valeur de cette dernière soit admissible pour les appareils d'utilisation situées en aval du détendeur.

Pour cela, un détendeur selon la présente invention comprend, d'une part, un jeu de butée interne destiné à limiter la course de la tige de poussée, et d'autre part, au moins un élément déformable intercalé entre l'organe thermosensible et la bague de réglage altimétrique.

Ainsi, à une altitude donnée, lorsque les contraintes subies par la tige de poussée sont élevées en raison d'une forte augmentation du volume de l'organe thermosensible, ladite tige de poussée peut être amenée à coulisser jusqu'à venir se plaquer contre un jeu de butée. Si l'expansion de l'organe thermosensible se poursuit, l'élément déformable qui a jusqu'ici servi de simple interface entre la bague de réglage altimétrique et l'organe thermosensible en vue d'assurer une transmission complète des contraintes à destination de la tige de poussée, est alors apte à absorber la compression supplémentaire générée par l'organe thermosensible, ce qui en définitive permet de limiter l'effort de consigne appliqué par l'actionneur précontraint réglable sur l'élément mobile.

Avantageusement, la tige de poussée est pourvue d'une tête élargie apte à venir en butée contre le jeu de butée.

Avantageusement encore, l'élément déformable est constitué par un ressort de surcharge ou un assemblage de rondelles élastiques. Une variante de réalisation peut consister par exemple dans l'utilisation d'une rondelle réalisée dans une matière élastiquement déformable, comme du caoutchouc notamment.

Préférentiellement, un détendeur selon l'invention comprend un corps principal contenant le mécanisme de régulation de la pression, et un couvercle renfermant l'organe thermosensible et la bague de réglage altimétrique.

Préférentiellement encore, le couvercle comprend une paroi latérale présentant une face interne dans laquelle est ménagé un épaulement interne faisant office de butée. De plus, le couvercle peut être fixé par vissage sur un corps intermédiaire solidaire du corps principal.

De manière avantageuse, des moyens de scellage sont rapportés sur la bague de réglage altimétrique afin de garantir l'intégrité du réglage.

Selon un mode de réalisation préférée, le détendeur comprend une bague de réglage initial apte à exercer des contraintes sur la tige de poussée.

L'invention sera mieux comprise à l'aide de la description détaillée qui est exposée ci-dessous en regard du dessin annexé dans lequel :
La figure 1 est vue en coupe longitudinale d'un détendeur selon l'invention lorsque la tige de poussée est en position haute ;
La figure 2 est une vue similaire du détendeur représenté à la figure 1 lorsque la tige de poussée est en position basse.
La figure 3 est une vue de dessus du détendeur représenté aux figures 1 et 2.

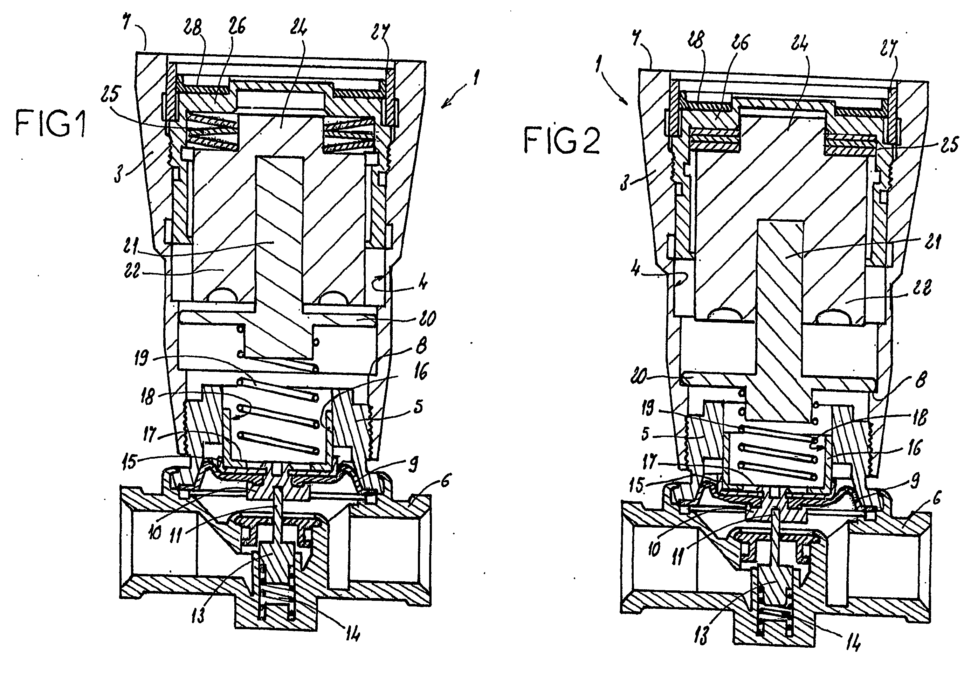

Un détendeur 1 selon l'invention, tel que représenté aux figures 1 et 2, est obtenu à partir d'un boîtier réalisé dans un matériau à conductivité thermique élevée pour être sensible à la température ambiante. Ce boîtier se décompose en un couvercle 3 sensiblement tubulaire comportant une paroi latérale 4 présentant, d'une part, une partie basse vissée sur un corps intermédiaire 5 cylindrique, pourvu d'un évidement central, solidaire d'un corps principal 6 servant de conduit d'amenée de gaz depuis une source de gaz vers un appareil utilisateur (non représentés), et d'autre part, une extrémité supérieure 7 ouverte pouvue d'un filetage interne. La face interne de la paroi latérale 4 possède par ailleurs en partie basse un épaulement interne 8 circulaire prévu pour constituer une butée.

Une membrane 9 circulaire faisant office d'élément mobile est fixée dans le corps intermédiaire 5, au niveau de la ligne de jonction avec le corps principal 6. Cette membrane 9 comporte un orifice central dans lequel est inséré un organe de poussée 10 apte à exercer des contraintes sur une tige 11 d'un piston de fermeture logé dans le corps principal 6 et pourvu d'un clapet de fermeture 13 en appui sur un ressort de renvoi 14. Par ailleurs, cette membrane 9 supporte un disque métallique 15 doté d'un alésage central fixé dans une encoche de l'organe de poussée 10.

Une bague de frottement 16, logée dans l'évidement central du corps intermédiaire 5, est placée en appui contre la membrane 9. Plus précisément, cette bague de frottement 16 comprend, d'une part, une base 17 placée au contact du disque métallique 15 et munie d'une perforation centrale en partie traversée par l'organe de poussée 10, et d'autre part, une paroi latérale 18 dont le diamètre initial est légèrement supérieur à celui de l'évidement central du corps intermédiaire 5, de façon à générer une déformation de la bague de frottement 16 se traduisant par un frottement entre la paroi latérale 18 de cette dernière et la paroi latérale de l'évidement central dudit corps intermédiaire 5.

Un ressort de consigne 19 central est positionné autour de l'organe de poussée 10 et comporte, d'une part, une extrémité inférieure reposant sur la base 17 de la bague de frottement 16, et d'autre part, une extrémité supérieure servant de support à une tête 20 élargie d'une tige de poussée 21 glissée dans un canal central présenté par un organe thermosensible 22 sensiblement tubulaire et doté d'un sommet 24 plat. Le diamètre maximal de la tête 20 est légèrement inférieur à celui de la paroi latérale 4 du couvercle 3, et l'organe thermosensible 22 présente, d'une part, une paroi externe rigide, et d'autre part, une paroi interne déformable délimitant le canal central, un élément à volume variable réagissant en fonction de la variation de la température étant positionné entre lesdites parois externe et interne.

Le disque métallique 15 disposé entre la membrane 9 et la bague de frottement 16 sert alors à convertir la pression régnant dans le corps principal 6 en une force appliquée sous le ressort de consigne 19.

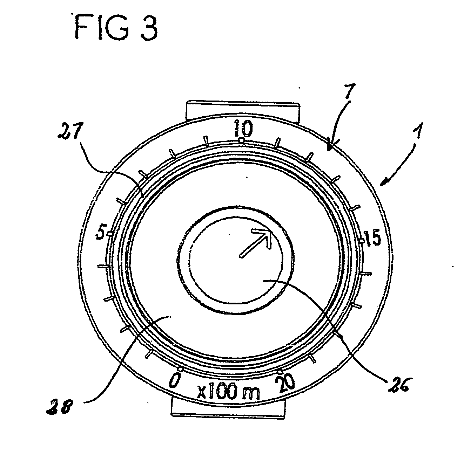

Un élément déformable 25, par exemple constitué par un assemblage de rondelles élastiques, est placé autour du sommet 24 et sert de support à une bague de réglage altimétrique 26 représentée à la figure 3 et fixée par vissage dans le filetage interne de l'extrémité supérieure 7 de la paroi latérale 4 du couvercle 3.

Enfin, une bague de régalage initial 27 est rapportée sur la bague de réglage altimétrique 26, et son positionnement exact est prédéfini en usine de manière à corriger toute imprécision de mesure. Ce réglage optimal se traduit par une application de contraintes compensatrices sur la bague de réglage altimétrique 26, la bague de réglage initial 27 étant ensuite définitivement fixée par collage dans l'extrémité supérieure 7 de la paroi latérale 4 du couvercle 3.

Avant de procéder au transfert effectif du gaz depuis la source de gaz vers l'appareil utilisateur, il est nécessaire, afin de tenir compte de l'altitude à laquelle ledit détendeur 1 est employé, de régler convenablement le positionnement de la bague de réglage altimétrique 26 à l'intérieur du boîtier depuis l'extérieur du détendeur 1. Pour cela, on procède au vissage ou au dévissage de la bague de réglage altimétrique 26, ce qui confère respectivement à cette dernière un mouvement de translation vers le bas ou vers le haut. Dans le cas d'un vissage, ladite bague de réglage altimétrique 26 vient exercer des contraintes sur l'élément déformable 25 qui les répercute sur la membrane 9 par l'intermédiaire successivement de l'organe thermosensible 22, de la tige de poussée 21, du ressort de consigne 19, de la bague de frottement 16, et du disque métallique 15.

Après un tel réglage, et si le détendeur 1 a vocation à demeurer installé au même endroit, des moyens de scellage 28 sont avantageusement rapportés sur la bague de réglage altimétrique 26 afin de garantir l'intégrité du réglage.

Par ailleurs, un tel détendeur 1 permet également la délivrance d'un débit volumique corrigé en pression en fonction de la température ambiante. En effet, l'élément à volume variable de l'organe thermosensible 22 est amené à se dilater ou à se rétracter de façon quasi instantanée, et les contraintes exercées sur le ressort de consigne 19 au moyen de la tige de poussée 21 sont par conséquent modifiées. Le ressort de consigne 19 prenant appui sur la membrane 9, il en découle que le clapet de fermeture 13 libère plus ou moins le passage selon que la membrane 9 se relève ou s'abaisse. En définitive, le gaz traversant le corps principal 6 est délivré sous une pression corrigée en fonction de la température ambiante.

De plus, ce détendeur 1 est remarquable dans la mesure où il permet de procéder à l'écrêtage de la pression en cas d'une forte élévation de la température ambiante provoquant une importante expansion de l'organe thermosensible 22 de laquelle découle une translation maximale de la tige de poussée 21. En effet, dans cette hypothèse, la tête 20 de la tige de poussée 21 est amenée à venir buter contre l'épaulement interne 8 disposé sur sa course. Cette position correspond alors à la compression maximale subie par le ressort de consigne 19. Néanmoins, si l'élévation de la température est telle que l'organe thermosensible 22 poursuit son extansion, les contraintes inhérentes exercées par ce dernier vont se reporter sur l'élément déformable 25 et être finalement absorbées par celui-ci.

Il doit être bien compris que la compression du ressort de consigne 19 sera d'autant plus grande que le couvercle 3 sera vissé de façon importante sur le corps intermédiaire 5. Il est donc possible de faire varier la limitation de l'effort de consigne en fonction de l'application envisagée.

Par ailleurs, un tel détendeur peut bien évidemment être utilisé pour une distribution du gaz en direct ou en tant qu'élément de pilotage d'un détendeur piloté assurant lui-même la distribution et la régulation de la ligne gaz.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Détendeur (1) de gaz destiné à être monté sur un conduit d'amenée de gaz reliant une source de gaz à un appareil utilisateur via un compteur de gaz volumétrique, ce détendeur renfermant un organe thermosensible (22) et une bague de réglage altimétrique (26) permettant de prendre respectivement en compte la variation de la température ambiante et la variation de la pression atmosphérique liée à l'altimétrie, ainsi qu'un mécanisme de régulation de la pression (13 à 15) commandé par le déplacement d'un élément mobile (9, 10), un unique actionneur précontraint réglable comprenant un ressort de consigne (19) intercalé entre, d'une part, l'élément mobile, et d'autre part, une tige de poussée (21) sur laquelle s'exercent les contraintes générées par l'organe thermosensible et la bague de réglage altimétrique, **caractérisé en ce qu**'il comprend un jeu de butée (8) interne destiné à limiter la course de la tige de poussée (21), et au moins un élément déformable (25) intercalé entre l'organe thermosensible (22) et la bague de réglage altimétrique (26).

2. Détendeur (1) selon la revendication 1, **caractérisé en ce que** la tige de poussée (21) est pourvue d'une tête (20) élargie apte à venir en butée contre le jeu de butée (8).

3. Détendeur (1) selon l'une quelconque des revendications 1 ou 2, **caractérisé en ce que** l'élément déformable (25) est constitué par un ressort de surcharge ou par un assemblage de rondelles élastiques.

4. Détendeur (1) selon l'une quelconque des revendications 1 à 3, **caractérisé en ce qu'**il comprend un corps principal (6) contenant le mécanisme de régulation de la pression (13 à 15), et un couvercle (3) renfermant l'organe thermosensible (22) et la bague de réglage altimétrique (26).

5. Détendeur (1) selon les revendication 3 ou 4, **caractérisé en ce que** le couvercle (3) comprend une paroi latérale (4) présentant une face interne dans laquelle est ménagé un épaulement interne (8) faisant office de butée.

6. Détendeur (1) selon l'une quelconque des revendications 4 ou 5, **caractérisé en ce que** le couvercle (3) est fixé par vissage sur un corps intermédiaire (5) solidaire du corps principal (6).

7. Détendeur selon l'une quelconque des revendications 1 à 6, **caractérisé en ce que** des moyens de scellage (28) sont rapportés sur la bague de réglage altimétrique (26) afin de garantir l'intégrité du réglage.

8. Détendeur (1) selon l'une quelconque des revendications 1 à 7, **caractérisé en ce qu'**il comprend une bague de réglage initial (27) apte à exercer des contraintes sur la tige de poussée (21).

## Claims

1. A gas regulator (1) intended to be mounted on a gas supply duct connecting a gas source to a user device via a volumetric gas meter, said regulator containing a heat-sensitive member (22) and an altimetric adjustment ring (26) respectively making it possible to take into account the room temperature variation and the altitude-dependent atmospheric pressure variation, as well as a pressure regulating mechanism (13 to 15) controlled by the movement of a movable element (9, 10), a single adjustable pre-stressed actuator comprising a reference spring (19) inserted between said movable element, on the one hand, and on the other hand, a push rod (21) on which the stresses generated by the heat-sensitive member and the altimetric adjustment ring are exerted, **characterized in that** it comprises an inner stop assembly (8) limiting the stroke of said push rod (21) and at least one deformable element (25) inserted between said heat-sensitive member (22) and said altimetric adjustment ring (26).

2. The regulator (1) according to claim 1, **characterized in that** the push rod (21) is provided with a widened head (20) that can abut against the stop assembly (8).

3. The regulator (1) according to any one of claims 1 or 2, **characterized in** the deformable element (25) is made up of a helper spring or by an assembly of elastic washers.

4. The regulator (1) according to any one of claims 1 to 3, **characterized in that** it comprises a main body (6) containing the pressure regulating mechanism (13 to 15), and a lid (3) containing the heat-sensitive member (22) and the altimetric adjustment ring (26).

5. The regulator (1) according to claims 3 or 4, **characterized in that** the lid (3) comprises a side wall (4) having an inner surface on which an inner shoulder (8) is arranged, serving as a stop.

6. The regulator (1) according to any one of claims 4 or 5, **characterized in that** the lid (3) is fixed by screwing on an intermediate body (5) secured to the main body (6).

7. The regulator according to any one of claims 1 to 6, **characterized in that** sealing means (28) are fastened on the altimetric adjustment ring (26) so as to guarantee the integrity of the adjustment.

8. The regulator (1) according to any one of claims 1 to 7, **characterized in that** it comprises an initial adjustment ring (27) that can exert stresses on the push rod (21).

## Patentansprüche

1. Gasregulator (1), der dazu bestimmt ist, auf einer Gaszuführungsleitung montiert zu sein, die eine Gasquelle mit einem Nutzungsgerät über einen Gasvolumenmesser verbindet, wobei dieser Regulator ein wärmeempfindliches Organ (22) und einen Höheneinstellring (26) einschließt, die es erlauben, jeweils die Schwankung der Raumtemperatur und die Schwankung des mit der Höhenmessung verbundenen atmosphärischen Drucks zu berücksichtigen, sowie einen Druckregelungsmechanismus (13 bis 15), der durch die Verschiebung eines bewegbaren Elements (9, 10) gesteuert wird, wobei ein einziger einstellbarer vorgespannten Aktuator eine Bezugsfeder (19) zwischen einerseits dem bewegbaren Element und andererseits einer Schubstange (21) umfasst, auf die die von dem wärmeempfindlichen Organ und dem Höheneinstellring erzeugten Spannungen einwirken, **dadurch gekennzeichnet, dass** er einen internen Anschlagsatz (8) umfasst, der dazu bestimmt ist, den Lauf der Schubstange (21) zu begrenzen, und mindestens ein verformbares Element (25) zwischen dem wärmeempfindlichen Organ (22) und dem Höheneinstellring (26).

2. Regulator (1) nach Anspruch 1, **dadurch gekennzeichnet, dass** die Schubstange (21) mit einem erweiterten Kopf (20) ausgestattet ist, der imstande ist, am Anschlagsatz (8) anzuschtagen.

3. Regulator (1) nach einem der Ansprüche 1 oder 2, **dadurch gekennzeichnet, dass** das verformbare Element (25) von einer Überlastungsfeder oder von einer Montage elastischer Scheiben gebildet wird.

4. Regulator (1) nach einem der Ansprüche 1 bis 3, **dadurch gekennzeichnet, dass** er einen Hauptkörper (6) umfasst, der den Druckregelungsmechanismus (13 bis 15) enthält, und einen Deckel (3), der das wärmeempfindliche Organ (22) und den Höheneinstellring (26) einschließt.

5. Regulator (1) nach den Ansprüchen 3 oder 4, **dadurch gekennzeichnet, dass** der Deckel (3) eine Seitenwand (4) umfasst, die eine Innenseite aufweist, in die ein interner Ansatz (8) eingearbeitet ist, der als Anschlug dient.

6. Regulator (1) nach einem der Ansprüche 4 oder 5, **dadurch gekennzeichnet, dass** der Deckel (3) durch Schrauben auf einen Zwischenkörper (5) befestigt ist, der mit dem Hauptkörper (6) verbunden ist.

7. Regulator (1) nach einem der Ansprüche 1 bis 6, **dadurch gekennzeichnet, dass** auf der Höheneinstellring (26) Verschlussmittel (28) aufgesetzt sind, um die Integrität der Einstellung zu garantieren.

8. Regulator (1) nach einem der Ansprüche 1 bis 7, **dadurch gekennzeichnet, dass** er einen Ersteinstellungsring (27) umfasst, der imstande ist, auf die Schubstange (21) Druck auszuüben.
